# EUROPEAN PATENT APPLICATION

(11) **EP 1 359 484 A2**
(43) Date of publication of application: **05.11.2003**
(21) Application number: 03075969.0
(22) Date of filing: 02.04.2003
(51) Int. Cl.: G05B 19/4069

(54) **Method for virtual inspection of virtually machined parts**

(30) Priority: 26.04.2002 US 375621 P; 05.02.2003 US 359001
(71) Applicant: Delphi Technologies, Inc., Troy, MI 48007 (US)
(72) Inventor: Landers, Diane M., Frankenmuth, MI 48734 (US); Thomas, Steven M., Saginaw, MI 48609 (US)
(74) Representative: Denton, Michael John

(57) **Abstract**

A method (100) for implementing a virtual inspection of a virtually machined workpiece (400) is disclosed. In an exemplary embodiment, the method (100) includes defining a set of master reference planes, defining (104) a set of positioning planes with respect to the set of master reference planes, and defining (106) a pair of intersecting cutting planes from the set of positioning planes. The pair of intersecting cutting planes define an inspection line (402) at the intersection thereof, wherein the inspection line (402) is swept through a selected area of the workpiece (400), thereby collecting inspection data for the workpiece (400).

## Description

### BACKGROUND

The present disclosure relates generally to computer aided design and manufacturing (CAD/CAM) and, more particularly, to a method for virtual inspection of virtually machined parts.

In numerically controlled (NC) milling technology, a tool or cutter is directed through a set of pre-recorded sequential trajectories to fabricate a desired shape from raw stock. This technology is capable of producing free-formed, sculptured surfaces while maintaining tight milling error tolerances. Consequently, NC milling technology is widely used in the production of complicated, high-precision products such as molds, dies, aerospace parts, etc. These products, especially molds and dies, typically influence many other subsequent production processes. In order to improve the accuracy and reliability of NC milling, certain verification methods are used to check milling tool paths for potential problems such as milling error, collision, and improper machining parameters, among others. Analytical methods are implemented to graphically simulate the milling process off-line and, in some cases, verify milling error, tool assembly collision, and other machining parameters. Thus, NC programmers can visualize the shape of milled parts and understand potential problems in an efficient, less expensive, and more accurate way.

Direct solid modeling is one approach used in simulating the material removal process, implemented through direct Boolean difference operations between a solid model of the workpiece and solid models of swept volumes of the milling tool. The milling process may be realistically simulated, resulting in an explicit solid model of the milled workpiece that may be graphically presented and reviewed. Since the milled part is explicitly defined by a solid representation, a subsequent analysis and computation of milling error, volume removal rate, or milling dynamics can be readily performed.

In the real world, the inspection of a milled part may be accomplished with a coordinate measuring machine (CMM), in which a small probe or pointer is used to trace the three-dimensional surfaces of the part in order to measure the specific dimensions thereof. Since such an inspection process assists in decreasing time and expense in the actual manufacturing of parts, it is also desirable to have a similar process for the verification of a mathematical-based, virtual machining application as described above.

### SUMMARY

The above discussed and other drawbacks and deficiencies of the prior art are overcome or alleviated by a method for implementing a virtual inspection of a virtually machined workpiece. In an exemplary embodiment, the method includes defining a set of master reference planes, defining a set of positioning planes with respect to the set of master reference planes, and defining a pair of intersecting cutting planes from the set of positioning planes. The pair of intersecting cutting planes define an inspection line at the intersection thereof, wherein the inspection line is swept through a selected area of the workpiece, thereby collecting inspection data for the workpiece.

In one aspect, the intersecting cutting planes further include a first cutting plane rotatable about a first axis, and a second cutting plane rotatable about a second axis. Rotation of the first cutting plane determines a path position of the inspection line, and rotation of the second cutting plane determines a contact angle between the inspection line and the workpiece. The first axis is defined by the intersection between a first positioning plane and a second positioning plane, while the second axis is defined by the intersection between a third positioning plane and a fourth positioning plane. The fourth positioning plane is perpendicular to said first cutting plane.

### BRIEF DESCRIPTION OF THE DRAWINGS

Referring to the exemplary drawings wherein like elements are numbered alike in the several Figures:
Figure 1 is a block diagram illustrating a method for implementing a virtual inspection of a virtually machined workpiece, in accordance with an embodiment of the invention;
Figure 2 is a perspective view of a set of fixed master planes used in accordance with the method of Figure 1;
Figure 3(a) is a perspective view of a set of positioning planes used in accordance with the method of Figure 1;
Figure 3(b) and 3(c) illustrate the definition of a pair of cutting planes used in accordance with the method of Figure 1;
Figure 4(a) through 4(g) are perspective views which further illustrate the exemplary process of Figures 3(a) through 3(c), shown along with a virtually machined workpiece positioned with respect to the set of fixed master planes shown in Figure 2; and
Figure 5 illustrates a finished virtual workpiece along with sets of data inspection points taken in accordance with the virtual inspection method of Figure 1.

### DETAILED DESCRIPTION

Disclosed herein is a method for implementing a virtual inspection of a virtually machined workpiece. Briefly stated, the inspection process is controlled through a series of master planes, positioning planes and cutting planes. Three master planes (x-y, y-z and z-x) serve as a fixed reference. From these fixed reference planes, a corresponding set of positioning planes are offset and rotated from the master planes to provide positioning for a pair of cutting planes. The cutting planes are defined to be non-parallel and therefore intersect along an "inspection" line that is used as a virtual inspection probe. This inspection line is then passed through a virtual part to be measured, wherein an inspection point on the part is defined by the intersection of the inspection line and the part. By changing the positioning of one or both of the cutting planes, the inspection line is caused to be swept through a selected area of the virtual part for data collection. The same process may be done over the desired part print model in order to collect reference points for comparison.

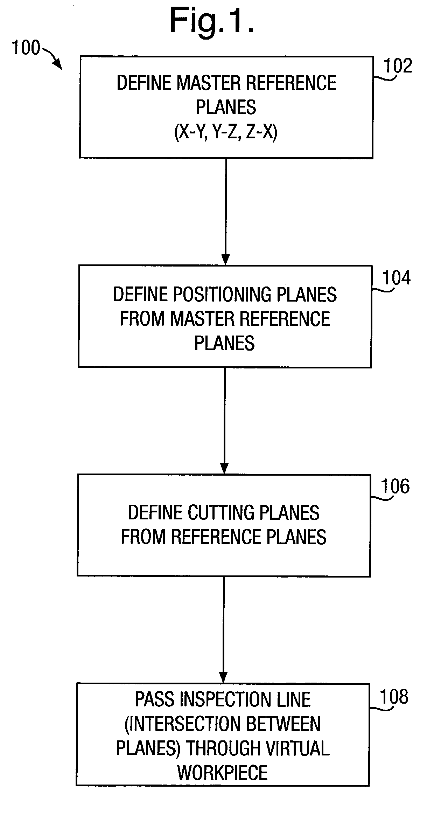

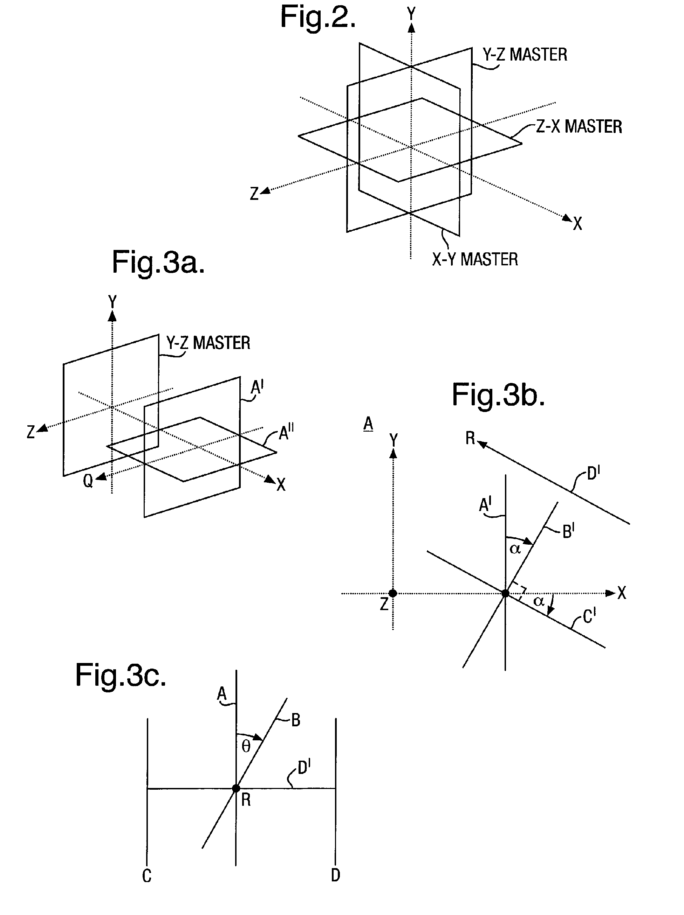

Referring initially to Figure 1, there is shown a block diagram that illustrates a method 100 for implementing a virtual inspection of a virtually machined workpiece, as described above. The method 100 begins at block 102, where a series of three mutually perpendicular, fixed master reference planes are defined. More particularly, the fixed master planes are designated as an x-y plane, a y-z plane and a z-x plane, as is shown in Figure 2. Once the master reference planes have been defined, a set of positioning planes may be defined therefrom, as shown at block 104. The positioning planes will include a set of "offset" planes, which may be positioned parallel with respect to the master planes. In addition, the positioning planes will also include one or more perpendicular or parallel planes disposed with respect to the cutting planes, as described later.

Method 100 then continues to block 106, where a pair of cutting planes are defined from the positioning planes. As stated earlier, the cutting planes are not parallel with respect to one another, and therefore intersect at a line, referred to hereinafter as an inspection line. At block 108, the inspection line is used as a virtual inspection probe to be passed through a virtually machined workpiece. Each cutting plane is pivotally disposed about a defined axis, thus the inspection line may be through along a desired area of the workpiece by rotating one or both of the cutting planes.

The above described process is further understood with reference to Figures 3(a) through 3(c), which illustrate the formation of exemplary cutting planes. Figure 3(a) shows the location of defined positioning planes A, A' and A", associated with the x-y, y-z and z-x master planes, respectively. In the present example, positioning plane A is set to have an offset of zero, thus positioning plane A is equal to the x-y master plane in this instance. In addition, positioning plane A" is also set to have an offset of zero, meaning A" lies in the z-x master plane. However, positioning plane A' is defined with an offset distance along the positive x-axis direction, and therefore A' is parallel to the y-z master plane. It can be seen, therefore that the intersection of A' and A" (z-x master plane), defines a line which is designated as the Q-axis.

Referring now to Figure 3(b), a first cutting plane, B', is defined. It will be noted that Figure 3(b) is a view taken along the negative z-direction with respect to Figure 3(a). Beginning with position plane A', the first cutting plane B' may occupy any planar position that pivots about the Q-axis. By way of example, B' is rotated by an acute angle, α, from A'. The first cutting plane B' will control the path position for the subsequently defined inspection line along the virtual workpiece. Once B' is defined, another positioning plane, C', is defined as being perpendicular to B'. If B' is caused to be rotated, then C' is correspondingly rotated to maintain its perpendicular orientation with respect to C'.

Next, another positioning plane, D', is defined as a parallel offset to C', as also shown in Figure 3(b). The resulting intersection of positioning planes D' and A yields another line which is designated as the R-axis. From the R-axis, a second cutting plane, B, is defined as being capable of occupying any planar position pivoting about the R-axis, beginning with positioning plane A. The second cutting plane B will control the contact angle between the inspection line and the surface of the workpiece. Figure 3(c) is a view along the R-axis direction, and more clearly illustrates the relationship between second cutting plane B and positioning plane A. By way of example, cutting plane B is shown offset from positioning plane by an acute angle, θ, about the R-axis.

Figure 3(c) also illustrates a pair of additional planes, C and D, which are offset from the x-y master plane on opposite sides of positional plane A. Planes C and D are used as "trim planes" to establish boundaries for second cutting plane B as it pivots about the R-axis.

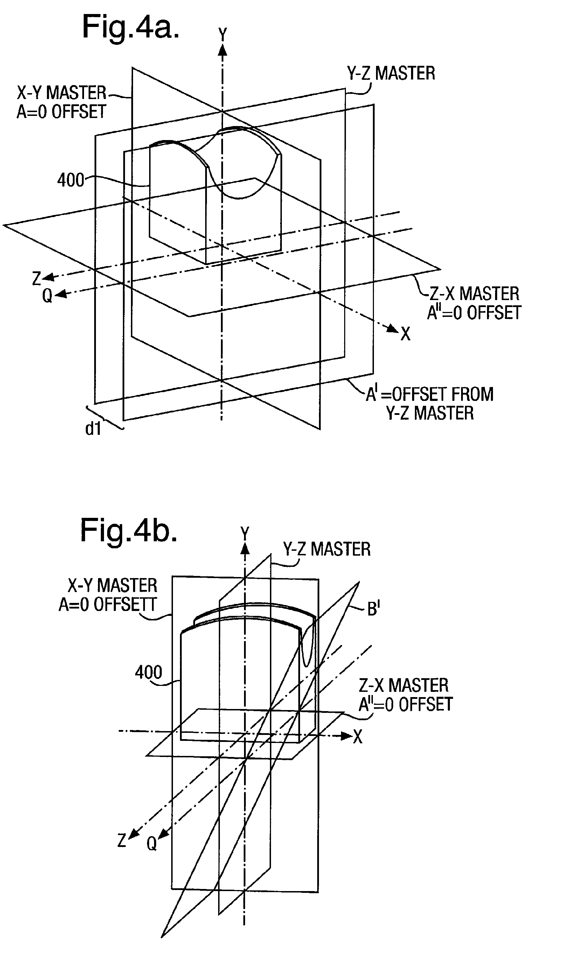

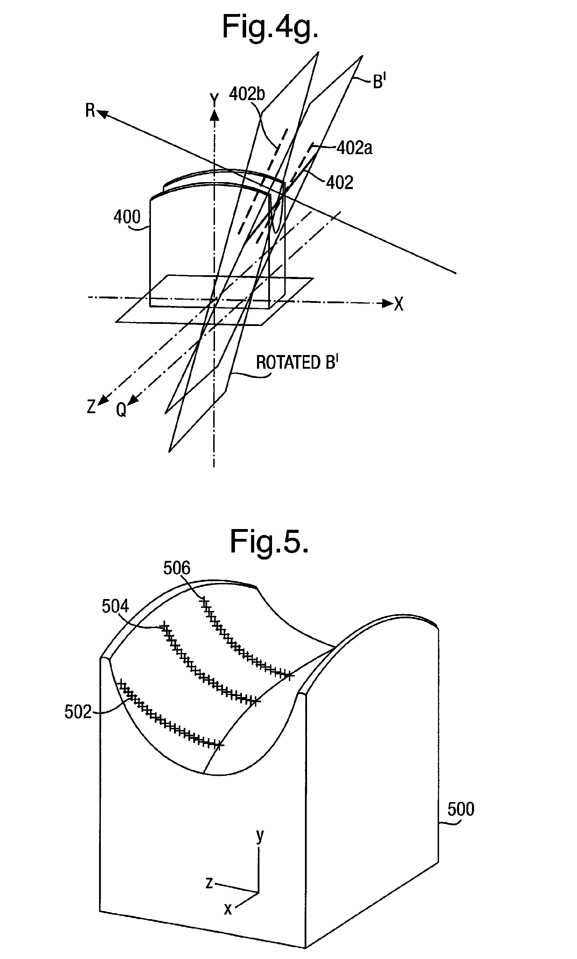

Referring now to Figure 4(a), there is shown a virtually machined workpiece 400 positioned with respect to the master planes, x-y, y-z and z-x. Also shown are the positioning planes A, A' and A" associated with the master planes. It will be recalled that positioning planes A and A" have a zero offset in this example, and thus are equivalent to the x-y and z-x master planes, respectively. As can be seen, the positioning plane A' is defined as being offset and parallel to the y-z master plane by a distance d₁, along the positive x direction. Thereby, the Q-axis is defined by the intersection of A' and A".

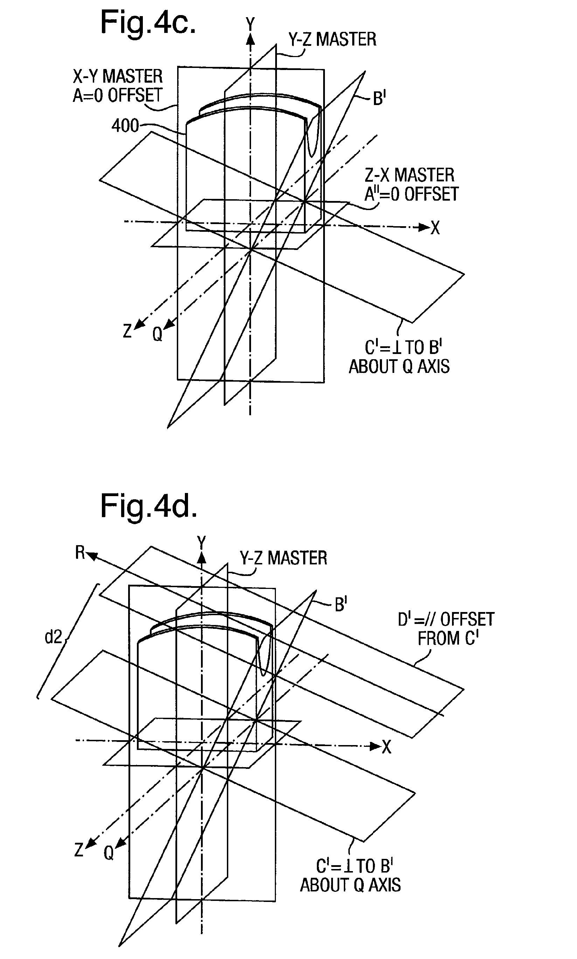

Figure 4(b) illustrates an exemplary location for the first cutting plane, B'. As is shown, B' is rotated from the initial location at A' (not shown in Figure 4(b)) about the Q-axis. Correspondingly, Figure 4(c) illustrates positioning plane C' shown in its perpendicular orientation with respect to B', about the Q-axis. Then, in Figure 4(d), positioning plane D' is shown as being perpendicular to positioning plane C', and offset a distance d₂ therefrom. (For ease of illustration, the master planes are not shown in Figure 4(d).) The resulting intersection of positioning plane D' and positioning plane A (i.e., the x-y master plane in this instance) defines the R-axis.

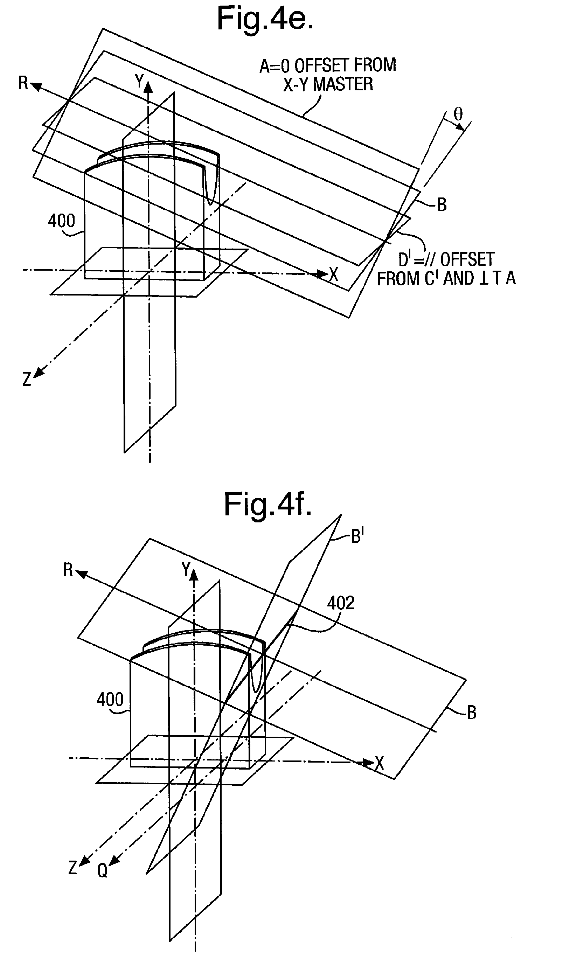

Figure 4(e) illustrates the definition of the second cutting plane, B. It will be recalled that second cutting plane B begins in positioning plane A, and pivots about the R-axis. Thus, second cutting plane B is shown in Figure 4(e) as being rotated from positioning plane A by an angle θ.

Referring now to Figure 4(f), the intersection of the first and second cutting planes B', B is illustrated, thereby defining the inspection line 402 (shown as a darkened segment). Ultimately, the virtual length of the inspection line 402 may be controlled by using trim planes (not shown) to define boundaries for the cutting planes, as was described in Figure 3(c). Furthermore, by changing the angle of the first cutting plane B' with respect to the Q-axis the path position of the inspection line 402 may be changed, as shown by dashed line 402a. Similarly, a change in the angle of the second cutting plane, B, results in a change in the contact angle between the inspection line 402 and the workpiece 400, as shown by dashed line 402b.

Finally, Figure 5 illustrates another example of a virtual workpiece 500 having a series of inspection data points 502 generated thereupon through the use of the above described method. The individual data points are shown as small x's along the contoured surface of the workpiece 500. Again, each data point represents the intersection of the inspection line described earlier and the surface of the workpiece 500. In studying the pattern of x's shown on the workpiece 500, it can be seen that a first group (path) of data points 504 may be taken by keeping the first cutting plane B' at a constant angle and sweeping the second cutting plane B along a determined angular path about the R-axis. Then, another group of data points 506 may be taken by adjusting the angle of the first cutting plane B' at a new constant angle and then re-sweeping B along the same angular path as above. The process can be repeated depending on the location and accuracy of the inspection required.

Through the use of the above described method, a virtual inspection process may be implemented for a virtually designed and machined part. Once the part is positioned with respect to a set of master reference (datum) planes, any point may be measured thereon by creating the inspection line from the cutting planes. The location of the inspection line is determined by the relative position of the two cutting planes which, in turn, is established by the location of positioning planes with respect to the master planes. It will be appreciated that the illustrations discussed above are exemplary in nature and should not be interpreted in any limiting manner. For example, each of the positioning planes A, A' and A" could have been offset a distance from their respective master reference planes (instead of just A' as discussed earlier).

Although the generation of the inspection line 402 is preferably implemented through the generation of the planes as discussed, those skilled in the art will appreciate that other methods may also be used in this regard. For example, since two points determine a line, the inspection line 402 could also be defined by manipulating a pair of points in a coordinate space. However, since the manipulation of planes may be accomplished by translation or pivoting about an axis, the above planar method is preferred in ultimately generating and manipulating the inspection line 402.

In addition, the creation and manipulation of the reference, position and cutting planes may be done by conventional associative means, characteristic of a "vertical modeling" system. In such a system, modeling elements such as datum planes are created in reference to a base or parent feature. The datum planes, in turn, may be used to define placement and positioning references for other modeling elements such as positioning planes or form features. However, the removal of a parent feature results in the loss of association between subsequently designed child features and the parent feature, which, in turn, results in the loss of any additional features that are subsequently associated to the child features. Thus, any modifications of certain features using vertical modeling principals may require additional effort, due to the fact that if a parent feature is edited, then all children of the parent feature need to be edited as well.

In contrast, a horizontally structured modeling of the planes allows for the independent addition or subtraction of additional features. Such a horizontally structured coordinate system facilitates model generation wherein a feature is placed and positioned independently according to subsequently constrained references (e.g., coordinate system(s), datums, and the like). If a parent feature is removed, there will be no loss of any associated child features therewith. This independence of the various modeling elements also allows for the addition, subtraction, and reordering of new or existing modeling elements. Additional information regarding horizontally structured CAD/CAM and modeling systems may be found in commonly assigned U.S. Patent , U.S. Patent Application Serial Number 09/483,722 by Khurana et al., and U.S. Patent , U.S. Patent Application Serial Number 09/483301, by Khurana et al. the contents of which are incorporated herein by reference in their entirety. Additional features of horizontally structured modeling are described in commonly assigned United States Patent No. , United States Patent Application Serial No. 10/032,960, Publication No. US 2002-0133803 A1 filed October 24, 2001, entitled "Enhancement to Horizontally-Structured CAD/CAM Modeling", by Diane M. Landers et al. and United States Patent No. , United States Patent Application Serial No. 10/033,163, filed October 24, 2001, Attorney Docket No. DP-304037, Publication No. US 2002-0133267 A1 entitled "Enhancement to Horizontally Structured Manufacturing Process Modeling", by Diane M. Landers et al., the disclosures of which are incorporated by reference herein in their entirety.

In addition, the disclosed invention may be embodied in the form of computer-implemented processes and apparatuses for practicing those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or as data signal transmitted whether a modulated carrier wave or not, over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

While the invention has been described with reference to a preferred embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method (100) for implementing a virtual inspection of a virtually machined workpiece (400), the method (100) comprising:
generating an inspection line (402), said inspection line (402) being used to intersect with the workpiece (400) to define an inspection point;
wherein said inspection line (402) is swept through a selected area of the workpiece (400), thereby collecting inspection data for the workpiece (400).

2. The method (100) of claim 1, wherein generating said inspection line (402) further comprises:
defining (102) a set of master reference planes;
defining (104) a set of positioning planes with respect to said set of master reference planes; and
defining (106) a pair of intersecting cutting planes from said set of positioning planes;
wherein said inspection line (402) is defined at the intersection of said pair of intersecting cutting planes.

3. The method (100) of claim 2, wherein said pair of intersecting cutting planes further comprise:
a first cutting plane, said first cutting plane being rotatable about a first axis; and
a second cutting plane, said second cutting plane being rotatable about a second axis;
wherein rotation of said first cutting plane determines a path position of said inspection line (402), and rotation of said second cutting plane determines a contact angle between said inspection line (402) and the workpiece (400).

4. The method (100) of claim 3, wherein said first axis is defined by the intersection between a first positioning plane and a second positioning plane.

5. The method (100) of claim 4, wherein said second axis is defined by the intersection between a third positioning plane and a fourth positioning plane, said fourth positioning plane being perpendicular to said first cutting plane.

6. A storage medium, comprising:
a machine readable computer program code for implementing a virtual inspection of a virtually machined workpiece (400); and
instructions for causing a computer to implement a method (100), the method (100) further comprising:
generating an inspection line (402), said inspection line (402) being used to intersect with the workpiece (400) to define an inspection point;
wherein said inspection line (402) is swept through a selected area of the workpiece (400), thereby collecting inspection data for the workpiece (400).

7. The storage medium of claim 6, wherein generating said inspection line (402) further comprises:
defining (102) a set of master reference planes;
defining (104) a set of positioning planes with respect to said set of master reference planes; and
defining (106) a pair of intersecting cutting planes from said set of positioning planes;
wherein said inspection line (402) is defined at the intersection of said pair of intersecting cutting planes.

8. The storage medium of claim 7, wherein said pair of intersecting cutting planes further comprise:
a first cutting plane, said first cutting plane being rotatable about a first axis; and
a second cutting plane, said second cutting plane being rotatable about a second axis;
wherein rotation of said first cutting plane determines a path position of said inspection line (402), and rotation of said second cutting plane determines a contact angle between said inspection line (402) and the workpiece (400).

9. The storage medium of claim 8, wherein said first axis is defined by the intersection between a first positioning plane and a second positioning plane.

10. The storage medium of claim 9, wherein said second axis is defined by the intersection between a third positioning plane and a fourth positioning plane, said fourth positioning plane being perpendicular to said first cutting plane.

11. A computer data signal, comprising:
code configured to cause a processor to implement a method (100) for, the method (100) further comprising:
generating an inspection line (402), said inspection line (402) being used to intersect with the workpiece (400) to define an inspection point;
wherein said inspection line (402) is swept through a selected area of the workpiece (400), thereby collecting inspection data for the workpiece (400).

12. The computer data signal of claim 11, wherein generating said inspection line (402) further comprises:
defining (102) a set of master reference planes;
defining (104) a set of positioning planes with respect to said set of master reference planes; and
defining (106) a pair of intersecting cutting planes from said set of positioning planes;
wherein said inspection line (402) is defined at the intersection of said pair of intersecting cutting planes.

13. The computer data signal of claim 12, wherein said pair of intersecting cutting planes further comprise:
a first cutting plane, said first cutting plane being rotatable about a first axis; and
a second cutting plane, said second cutting plane being rotatable about a second axis;
wherein rotation of said first cutting plane determines a path position of said inspection line (402), and rotation of said second cutting plane determines a contact angle between said inspection line (402) and the workpiece (400).

14. The computer data signal of claim 13, wherein said first axis is defined by the intersection between a first positioning plane and a second positioning plane.

15. The computer data signal of claim 14, wherein said second axis is defined by the intersection between a third positioning plane and a fourth positioning plane, said fourth positioning plane being perpendicular to said first cutting plane.
